# EUROPÄISCHE PATENTSCHRIFT

(11) **EP 2 253 254 B1**
(45) Veröffentlichungstag und Bekanntmachung des Hinweises auf die Patenterteilung: **05.12.2012**
(21) Anmeldenummer: 10005001.2
(22) Anmeldetag: 12.05.2010
(51) Int. Cl.: A47J 31/44

(54) **Getränkebereitungsmaschine**
Beverage preparation machine
Machine de préparation de boissons

(30) Priorität: 18.05.2009 EP 09405081
(43) Veröffentlichungstag der Anmeldung: 24.11.2010
(73) Patentinhaber: Jura Elektroapparate AG, 4626 Niederbuchsiten (CH)
(72) Erfinder: Reyhanloo, Sharhyar, 4573 Lohn-Ammansegg (CH)
(74) Vertreter: EGLI-EUROPEAN PATENT ATTORNEYS

(56) Entgegenhaltungen:
- WO-A-2007/082888
- US-A- 5 251 541

## Beschreibung

Die Erfindung betrifft das technische Gebiet der Getränkebereitungsmaschinen und insbesondere das Gebiet der Be-/Entlüftung eines durch ein Aussengehäuse umschlossenen Innenraumes der Getränkebereitungsmaschine.

Es sind Getränkebereitungsmaschinen bekannt, welche den Bezug von verschiedenen Getränken, wie beispielsweise Kaffee, Espresso, Kakao, usw., erlauben. Zu solchen Getränkebereitungsmaschinen zählen auch sogenannte Kaffee-Vollautomaten, bei welchen Kaffeebohnen und optional Leitungswasser vorrätig gehalten sind, und welche auf Knopfdruck die Kaffeebohnen in einem eigenen Mahlwerk mahlen, das Kaffeepulver in einer Brühgruppe pressen, mit erhitztem Wasser versetzen und daraus frischen Kaffee brühen.

An einem Aussengehäuse, welches einen Innenraum von Getränkebereitungsmaschinen umgibt, sind herkömmlicherweise Lüftungsschlitze zur Be-/Entlüftung angebracht. Dadurch wird gewährleistet, dass die Feuchtigkeit aus dem Innenraum entweichen kann, und dass ebenfalls Wärme, welche insbesondere durch ein Heizelement erzeugt wird, aus dem Innenraum entweichen kann, sodass einzelne Bauteile im Innenraum nicht überhitzt werden. Diese Be-/Entlüftung kann durch thermische Konvektion stattfinden, bei welcher Aussenluft durch Lüftungsschlitze, welche im unteren Bereich oder an der Bodenplatte von der Getränkebereitungsmaschine angeordnet sind, in den Innenraum angesaugt wird, an den Bauteilen der Getränkebereitungsmaschine vorbeistreift und dabei Feuchtigkeit und Wärme aufnimmt, und dann durch Lüftungsschlitze, welche im oberen Bereich des Aussengehäuses angeordnet sind, an die Aussenumgebung entweicht. Diese Belüftung kann aber auch mittels Lüfter oder Ventilatoren zwangsweise erfolgen. Die Abführung von Feuchtigkeit aus dem Innenraum ist sehr wichtig, um einer Schimmelbildung zuvorzukommen, welche insbesondere an Bauteilen zu verhindern ist, welche in irgendeiner Art mit Lebensmitteln, beispielsweise die Kaffeebohnen, das Kaffeepulver, das Leitungswasser und der gebrühte Kaffee, in Kontakt stehen.
Wie oben beschrieben, ist eine ausreichende Be-/Entlüftung durch Lüftungsschlitze, welche auch als Be-/Entlüftungselemente bezeichnet werden können, sehr wichtig. Ein Nachteil dieser Lüftungsschlitze besteht darin, dass durch diese Staub, Wasser oder kleinere Gegenstände unbeabsichtigt in den Innenraum eindringen können.

Besonders das versehentliche Eindringen von Wasser durch Lüftungsschlitze, welche in einem oberen Bereich des Aussengehäuses oder an dem oberen Abschlussdeckel des Aussengehäuses angeordnet sind, ist ein häufiges Szenario, da viele Getränkebereitungsmaschinen einen Wassertank enthalten, welcher regelmässig mit Leitungswasser nachgefüllt werden muss. Bei einer Unachtsamkeit des Bedieners kann sehr schnell unbeabsichtigt Wasser durch diese Lüftungsschlitze in den Innenraum hereinfliessen. Auch wenn die empfindliche Steuerelektronik zumeist in einem unteren, geschützten Bereich der Getränkebereitungsmaschine angeordnet ist, stellt sich schnell die Wahrscheinlichkeit ein, dass das Wasser auch einen Weg zur Steuerelektronik findet und auf der zumeist ungeschützten Elektronikplatine einen Kurzschluss auslöst, welcher insbesondere bei komplexen IC-Baugruppen einen sofortigen und dauerhaften Defekt auslöst. Auch verlaufen im Innenraum viele Leitungskabel, welche Hochspannung führen, deren Steckkontakte zumeist ungeschützt sind. Eintretendes Wasser kann auch hier unverzüglich einen Kurzschluss auslösen, welcher im besten Fall zu einem Auslösen einer Hochspannungs-Schutzsicherung führen kann, jedoch in einem ungünstigen Szenario auch zu einem Defekt von einzelnen elektrischen Baugruppen führen kann.

Das Eindringen von Staub wirkt sich nachteilig auf die Be-/Entlüftung des Innenraums aus, da sich die Staubpartikel, insbesondere bedingt durch die Feuchtigkeit im Innenraum, leicht an den Lüftungsschlitzen festsetzen können und diese mit der Dauer verschliessen können, welches dann zu einer unzureichenden Be-/Entlüftung des Innenraums führt.

Das versehentliche Eindringen von Gegenständen in den Innenraum kann zu mechanischen Fehlfunktionen führen. Beispielsweise kann das Eindringen eines Gegenstandes auf den Gewindespindelbereich der Brühgruppe dazu führen, dass dieser Gegenstand beim Betrieb der Brühgruppe in einen Zahnradeingriff gelangt und den Betrieb behindert oder dort sogar mechanische Schäden hervorruft.

Ein weiterer Nachteil von Lüftungsschlitzen besteht darin, dass der optische Entwurf von Getränkebereitungsmaschinen durch deren Vorgabe eingeschränkt wird. Der Industriedesigner von Getränkebereitungsmaschinen kann dadurch seinen Designvorstellungen keinen freien Raum lassen, da die Bereitstellung von Lüftungsschlitzen bislang technisch vorgegeben ist. Das Industriedesign von Getränkebereitungsmaschinen hat einen immer stärker werdenden verkaufsfördernden Einfluss und dabei fügen sich Lüftungsschlitze immer seltener optisch in das Designkonzept ein. Heutige Designkonzepte richten sich verstärkt darauf, dass das Aussengehäuse möglichst glatte Flächen mit möglichst wenigen Unterbrechungen aufweist, da dies dem Geschmack der Kunden verstärkt entspricht.

Zudem wird die Reinigung durch glatte Flächen vereinfacht. So werden verstärkt Tasten und Schalter weitestgehend durch berührungsempfindliche Sensoren ersetzt, welche hinter einer glatten Fläche angeordnet sind, um die Reinigung zu erleichtern. Dieses Designkonzept findet jedoch bislang bei den Lüftungsschlitzen seine Grenzen, da auf diese bislang nicht verzichtet werden kann. Somit konterkarieren die Lüftungsschlitze dem Bestreben des Industriedesigners, möglichst glatte, ebene und durchgängige Flächen vorzusehen, welche optisch in das Designkonzept passen und schnell und einfach zu reinigen sind.

Ein weiterer Nachteil von herkömmlichen Lüftungsschlitzen besteht darin, dass eine Abwärme, welche beispielsweise temporär durch das Heizelement erzeugt wird, dauerhaft ungenutzt entweicht. Zwar muss, wie oben beschrieben, eine übermässige Wärme aus dem Innenraum abgeführt werden, allerdings kann eine zu stark konzipierte Abfuhr der Wärme zu einer übertriebenen Abkühlung, beispielsweise des Heizelements, welches im eingeschalteten Zustand der Getränkebereitungsmaschine durch temporäre Erhitzung stets Heisswasser vorrätig hält, führen. Diese Wärme wird übertrieben abgeführt, mit der Folge, dass das Heizelement häufiger als notwendig nachheizen muss, wodurch unnötig viel Energie verbraucht wird.

Ein Vorteil der vorliegenden Erfindung besteht darin, dass das Be-/Entlüftungselement so kurz wie möglich geöffnet ist, um die Wahrscheinlichkeit eines Eindringens von Staub, Wasser oder Gegenständen grösstenteils zu reduzieren, um ebene und durchgängige Flächen bereitzustellen, welche schnell und einfach zu reinigen sind, und um eine übermässige Abfuhr von Wärme zu verhindern, wodurch Energie eingespart wird.

Dies wird durch eine Getränkebereitungsmaschine nach Anspruch 1 bewirkt.

Ein wesentlicher Punkt der Erfindung besteht darin, dass das mindestens eine Be-/Entlüftungselement zum Öffnen und Schliessen ansteuerbar ist.

Vorteilhafte Weiterbildungen der Getränkebereitungsmaschine sind in den Unteransprüchen angegeben.

In einer bevorzugten Ausführungsform ist das mindestens eine Be-/Entlüftungselement zu einem variablen Öffnen ansteuerbar. Dadurch kann der Öffnungsgrad des Be-/Entlüftungselements in Abhängigkeit des Betriebszustandes variabel eingestellt werden. Hierbei ist das Be-/Entlüftungselement in einem dauerhaft ausgeschalteten Betriebszustand der Getränkebereitungsmaschine geschlossen. In einem eingeschalteten Betriebszustand der Getränkebereitungsmaschine kann das Be-/Entlüftungselement hingegen in Abhängigkeit von der Temperatur und/oder Feuchtigkeit des Innenraums ganz oder teilweise geöffnet werden. Hierbei kann das Be-/Entlüftungselement im Falle einer zu hohen Temperatur und/oder Feuchtigkeit im Innenraum, beispielsweise bedingt durch eine erfolgte Getränkebereitung, bei welcher viel Wärme und Feuchtigkeit erzeugt wird, geöffnet werden, um Wärme und Feuchtigkeit abzuführen. Hat bzw. haben sich dann Temperatur und/oder Feuchtigkeit im Innenraum nach einem bestimmten Zeitraum soweit reduziert, sodass eine weitere Abfuhr reduziert werden kann, wird sich das Be-/Entlüftungselement um einen gewissen Grad schliessen. Ist nach einem weiteren Zeitraum keine Abfuhr mehr von Nöten und würde eine weitere Abfuhr von Wärme sogar zu einer übermässigen Abkühlung von insbesondere dem Heizelement führen, wird dann das Be-/Entlüftungselement vollständig geschlossen.

Um eine möglichst effiziente Abfuhr der Wärme und/oder Feuchtigkeit aus dem Innenraum zu erzielen, ist das mindestens eine Be-/Entlüftungselement in einem oberen Bereich des Aussengehäuses angeordnet. Dadurch kann die Wärme, welche nach oben aufsteigt, am effizientesten abgeführt werden. Durch den Absaugeffekt wird zudem die Feuchtigkeit effizient abgeführt.

Vorzugsweise ist das mindestens eine Be-/Entlüftungselement im oberen Abschlussdeckel des Aussengehäuses angeordnet. Durch diese Anordnung werden Wärme und/oder Feuchtigkeit bei reduzierter Wirbelerzeugung schnell und zuverlässig aus dem Innenraum abgeführt. Die Anordnung des Be-/Entlüftungselements im oberen Abschlussdeckel des Aussengehäuses erhöht die Gefahr, dass im geöffneten Zustand insbesondere Wasser und kleine Gegenstände in den Innenraum eintreten können. Da das Be-/Entlüftungselement jedoch in Abhängigkeit des Betriebszustandes von der Getränkebereitungsmaschine und insbesondere in Abhängigkeit von der im Innenraum vorherrschenden Temperatur und/oder Feuchtigkeit geschlossen werden kann, wird diese Wahrscheinlichkeit auf ein Minimum reduziert.

Die Aussenseite des Be-/Entlüftungselementes ist im geschlossenen Zustand bevorzugt als eine ebene, durchgängige Fläche ausgebildet, welche an die angrenzende Aussenfläche des Aussengehäuses anschliesst. Dadurch kann die gesamte Aussenfläche in dem Bereich des Be-/Entlüftungselements im geschlossenen Zustand davon als eine einheitlich glatte Fläche angesehen werden, welches dem Industriedesigner einen grösseren Entwurfsfreiraum belässt. Ausserdem kann dieser Bereich schnell, einfach und mit reduziertem Reinigungsmitteleinsatz, beispielsweise lediglich durch einen feuchten Lappen, gereinigt werden, da keine vorstehenden oder vertieften Bereiche vorhanden sind, an welchen leicht Schmutz anhaftet, welcher dann erst durch Reinigungsmittel und ein zeitaufwendiges Reinigen zu entfernen ist.

Bevorzugt ist mindestens eine Öffnung im Aussengehäuse vorgesehen, wobei das mindestens eine Be-/Entlüftungselement und die mindestens eine Öffnung derart angeordnet sind, sodass sich bei geöffnetem Be-/Entlüftungselement eine thermische Konvektion von Aussenluft durch den Innenraum einstellt. Hierbei wird eine Strömung im Innenraum hervorgerufen, bei welcher Aussenluft durch die Öffnung in den Innenraum eintritt, entlang der zu kühlenden Gegenstände der Getränkebereitungsmaschine entlangstreift, dabei Wärme und Feuchtigkeit aufnimmt, und dann durch das Be-/Entlüftungselement aus dem Innenraum heraustritt.

Um die thermische Konvektion von Aussenluft durch den Innenraum zu maximieren, ist die mindestens eine Öffnung in einem unteren Bereich des Aussengehäuses angeordnet. Hierdurch erhöht sich der Temperaturgradient, welcher die thermische Konvektion einstellt, innerhalb des Innenraums, wodurch die Strömung der Aussenluft durch den Innenraum maximiert wird. Um eine maximale Strömung zu erreichen, ist die mindestens eine Öffnung in der Bodenplatte des Aussengehäuses angeordnet. Hierbei erhöht sich auch die Anzahl der Baugruppen innerhalb des Innenraums, an welchen die Aussenluft entlangstreift, und zudem wird auch die Elektronikeinheit gekühlt, welche sich meistens im unteren Bereich der Getränkebereitungsmaschine befindet. Ausserdem ist die in der Bodenplatte angeordnete Öffnung nicht sichtbar, welches oftmals dem Entwurfskonzept des Industriedesigners entgegenkommt. Auch kann die in der Bodenplatte angeordnete Öffnung dazu dienen, um eine unbeabsichtigt angesammelte Flüssigkeit aus dem Innenraum abzuleiten, bevor diese Schäden hervorruft.

Die Ansteuerung des mindestens einen Be-/Entlüftungselements erfolgt vorzugsweise durch ein Stellglied. Dieses Stellglied kann elektrisch oder nicht-elektrisch, beispielsweise durch Wärme, angesteuert werden.

Vorzugsweise ist das Stellglied ein Bimetallelement. Das Bimetallelement kann das Öffnen und Schliessen des Be-/Entlüftungselements temperaturabhängig ansteuern bzw. verstellen. In einer Getränkebereitungsmaschine ist mindestens ein Heizelement bzw. Thermoblock zur Wassererwärmung vorhanden. An diesem Heizelement wird das Bimetallelement direkt an einer geeigneten Stelle angebracht. Erwärmt sich das Heizelement, führt dies zu einem Anstieg der Temperatur und/oder Feuchtigkeit im Innenraum, welche abzuführen ist bzw. sind. In diesem Zustand ist das Öffnen des Be-/Entlüftungselements gewünscht. Das am Heizelement angebrachte Bimetallelement wird in diesem Zustand ebenfalls erwärmt und erzeugt eine Formänderung. Diese Formänderung ruft eine Bewegung des Bimetallelements hervor, welche dann mechanisch auf das Be-/Entlüftungselement übertragen wird. Somit wird das Be-/Entlüftungselement in Abhängigkeit von der Formänderung des Bimetallelements, hervorgerufen durch die Erwärmung und Abkühlung des Heizelements, und somit in Abhängigkeit von der Temperatur und/oder Feuchtigkeit im Innenraum, geöffnet und geschlossen. Hierzu ist keine elektrische Ansteuerung notwendig, wodurch die Zuverlässigkeit erhöht wird, eine zusätzliche Verdrahtung eingespart wird und insgesamt Kosten reduziert werden. Auch wird das variable Öffnen des Be-/Entlüftungselements auf einfache Art und Weise erzielt, da die Formänderung des Bimetallelements in Abhängigkeit von der angelegten Temperatur ebenfalls variabel ist. Wird die Erwärmung des Heizelements unterbrochen, kehrt das Bimetallelement wieder in seine Ursprungsform zurück. Durch diese Bewegung wird das Be-/Entlüftungselement wieder geschlossen. Es können Federelemente im Be-/Entlüftungselement vorgesehen werden, welche eine Druckkraft ausüben, welche das Schliessen des Be-/Entlüftungselements unterstützt.

Vorzugsweise ist das Bimetallelement mit einem Heizdraht umwickelt und elektrisch ansteuerbar. Diese Ausführungsform kann dann zum Tragen kommen, wenn die Distanz zwischen Be-/Entlüftungselement und Heizelement so gross ist, dass ein herkömmliches Bimetallelement nicht zwischengeschaltet werden kann. Diese Anordnung eines mit einem Heizdraht umwickelten Bimetallelements kann dann als Stellglied am Be-/Entlüftungselement angeordnet werden. Anstelle eines Heizdrahtes kann auch eine beliebige andere Erwärmungseinrichtung vorgesehen werden. Im Falle, dass eine Öffnung des Be-/Entlüftungselements notwendig ist, fliesst ein Strom durch den Heizdraht, welcher sich darauf hin erwärmt und dessen Erwärmung dann die Formänderung des Bimetallelements hervorruft. Diese Formänderung bewirkt wiederum eine Bewegung des Bimetallelements, welche mechanisch auf das Be-/Entlüftungselement übertragen wird. Hierbei kann der durch den Heizdraht fliessende Strom variiert werden, welches zur Folge hat, dass auch der Öffnungsgrad des Be-/Entlüftungselements je nach Anforderung variabel erstellt wird. Im Falle, dass das Be-/Entlüftungselement wieder geschlossen werden soll, wird die Stromzufuhr durch den Heizdraht unterbrochen, woraufhin das Bimetallelement wieder in seine Ursprungsform zurückkehrt. Durch diese Bewegung wird das Be-/Entlüftungselement wieder geschlossen. Es können auch hier Federelemente im Be-/Entlüftungselement vorgesehen werden, welche eine Druckkraft ausüben, welche das Schliessen des Be-/Entlüftungselements unterstützt.

Vorzugsweise ist das Stellglied ein elektrischer Antriebsmotor. Dieser elektrische Antriebsmotor kann ein Schrittmotor sein, welcher eine lineare oder rotative Kraft zum Öffnen des Be-/Entlüftungselements überträgt. Dadurch ist es auch möglich, das Be-/Entlüftungselement nur teilweise zu öffnen oder zu schliessen.

Vorzugsweise ist das Stellglied ein piezoelektrischer Aktuator. Ein solcher piezoelektrischer Aktuator übt je nach angelegter Spannung eine Verformung aus, welche eine Bewegung hervorruft, welche mechanisch auf das Be-/Entlüftungselement übertragen wird.

Bevorzugt kann das Stellglied ein Elektromagnet sein. Ein Elektromagnet übt bei einer elektrischen Ansteuerung eine elektromagnetische Kraft auf ein Metallelement aus. Diese Kraft kann in eine Bewegung überführt werden, welche dann mechanisch auf das Be-/Entlüftungselement übertragen wird.

Vorzugsweise ist das Stellglied dazu ausgebildet, das Be-/Entlüftungselement in Ansprechen auf einen Betriebszustand der Getränkebereitungsmaschine anzusteuern. Diese Ansteuerung kann in einer einfachen Ausführung dergestalt sein, dass sich das Be-/Entlüftungselement öffnet, sobald die Getränkebereitungsmaschine eingeschaltet wird und erst dann wieder schliesst, wenn die Getränkebereitungsmaschine abgeschaltet wird. Dieser Vorgang kann auch jeweils zeitverzögert stattfinden, nachdem sich die Maschine schon genügend abgekühlt hat.

In einer bevorzugten Ausbildung ist das Stellglied dazu ausgebildet, in Ansprechen auf ein Steuerprogramm, welches in einer Steuereinheit der Getränkebereitungsmaschine ausführbar ist, elektrisch ansteuerbar zu sein. In dieser Ausgestaltung können lediglich Stellglieder verwendet werden, welche elektrisch ansteuerbar sind. Unter den oben aufgeführten Beispielen von Stellgliedern kommt somit beispielsweise das einfache Bimetallelement nicht infrage. Die elektrische Ansteuerung des Stellgliedes in Ansprechen auf ein Steuerprogramm kann eine weitaus effizientere Ansteuerung des Be-/Entlüftungselementes als lediglich ein Öffnen und Schliessen in Abhängigkeit vom Einschaltvorgang der Getränkebereitungsmaschine bereitstellen. Hierbei kann das Steuerprogramm in Abhängigkeit von Werten, beispielsweise der Temperatur und/oder der Feuchtigkeit im Innenraum, welche der Steuereinheit zugeführt werden, eine komplexere und effizientere Ansteuerung des Be-/Entlüftungselements ermöglichen.

Vorzugsweise ist das Steuerprogramm dazu ausgebildet, das Stellglied in Abhängigkeit von einer Zeitfunktion und/oder Schwellwertfunktion anzusteuern. Mithilfe einer Zeitfunktion werden Vorgänge zum Öffnen und Schliessen des Be-/Entlüftungselements nicht unverzüglich dann ausgeführt, wenn die Temperatur und/oder die Feuchtigkeit im Innenraum bestimmte Werte überschreitet bzw. unterschreiten. Vielmehr werden die Vorgänge nach Ablauf einer durch die Zeitfunktion vorgegebenen Zeitspanne ausgeführt. Innerhalb dieser Zeitspanne bzw. Verzögerungszeit wird das Be-/Entlüftungselement unverändert belassen, obwohl entsprechende Signale zur Ansteuerung anliegen können. Somit reduziert sich das Öffnen und Schliessen des Be-/Entlüftungselements auf ein akzeptables Mass. Der gleiche Vorteil lässt sich erzielen, indem das Be-/Entlüftungselement in Abhängigkeit von einer Schwellwertfunktion geöffnet und geschlossen wird. Hierbei wird das Be-/Entlüftungselement beispielsweise geöffnet, wenn die Temperatur im Innenraum einen ersten Schwellwert übersteigt. Sinkt die Temperatur dann im Innenraum wieder ab, so wird das Be-/Entlüftungselement erst dann wieder geschlossen, wenn die Temperatur im Innenraum einen zweiten Schwellwert unterschreitet, wobei der zweite Schwellwert niedriger als der erste Schwellwert ist. Der gleiche Ablauf kann alternativ oder zusätzlich in Hinblick auf die Feuchtigkeit im Innenraum ausgeführt werden.

Bevorzugt ist das Steuerprogramm dazu ausgebildet, das Stellglied in Abhängigkeit von eingegebenen Signalen von mindestens einem Sensor anzusteuern. Es können ein oder mehrere Sensoren an relevanten Positionen im Innenraum angeordnet werden, sodass die Steuereinheit auch stets relevante Eingabewerte empfängt.

Vorzugsweise ist der mindestens eine Sensor ein Temperatur- und/oder Feuchtigkeitssensor. Diese Sensoren messen die für die Getränkebereitungsmaschine relevanten Grössen. Es können auch Sensoren vorgesehen werden, welche andere physikalische Grössen messen.

Vorzugsweise ist das mindestens eine Be-/Entlüftungselement im oberen Abschlussdeckel des Aussengehäuses angeordnet, und ist oberhalb des Be-/Entlüftungselements ein ebenes, durchgängiges Flächenelement angeordnet, welches Öffnungen enthält. Diese Ausgestaltung erweist sich als vorteilhaft, wenn aus Entwurfsgründen kein variables Erscheinungsbild, also das geöffnete oder geschlossene Be-/Entlüftungselement, des Aussengehäuses gewünscht ist. Das Be-/Entlüftungselement wird dann durch das ebene, durchgängige Flächenelement verdeckt. Die Öffnungen im ebenen, durchgängigen Flächenelement sorgen für eine ausreichende Be-/Entlüftung, wenn das Be-/Entlüftungselement geöffnet ist. Ein weiterer Vorteil besteht darin, dass Getränkebehälter, z.B. Tassen oder Becher, auf dem ebenen, durchgängigen Flächenelement dauerhaft aufgestellt werden können, welche dann durch die austretende Abwärme aus dem Innenraum der Getränkebereitungsmaschine vorgewärmt werden.

Der bereits genannte Vorteil der vorliegenden Erfindung wird auch durch ein Be-/Entlüftungselement zur Be-/Entlüftung eines von einem Aussengehäuse umschlossenen Innenraums einer Getränkebereitungsmaschine erzielt, welches Be-/Entlüftungselement zum Öffnen und Schliessen ansteuerbar ist.

Ein wesentlicher Punkt der Erfindung besteht dabei in dem besonders einfachen Aufbau des Be-/Entlüftungselements, welches mechanisch oder elektrisch ansteuerbar ist.

Der vorstehende Vorteil der vorliegenden Erfindung wird auch durch ein Verfahren zum Be-/Entlüften eines von einem Aussengehäuse umschlossenen Innenraums einer Getränkebereitungsmaschine durch ein Be-/Entlüftungselement nach Anspruch 15 erzielt. Dieses Verfahren zeichnet sich durch seinen einfachen und effizienten Ablauf aus und ist konstruktiv besonders einfach und kostengünstig realisierbar.

Die vorliegende Erfindung wird im Folgenden anhand eines Ausführungsbeispiels unter Bezugnahme auf die beiliegenden Figuren näher erläutert. Gleiche oder gleich wirkende Teile sind mit gleichen Bezugsziffern bezeichnet. Es zeigen:
- Figuren 1A, 1B: eine perspektivische Ansicht von einer Ge- tränkebereitungsmaschine mit einem einge- setzten Be-/Entlüftungselement, jeweils in Vorderansicht (Fig. 1A) und in einer An- sicht von unten (Fig. 1B),
- Figuren 2A, 2B: eine vergrösserte perspektivische Detail- ansicht der Getränkebereitungsmaschine, jeweils mit einem geschlossenen Be-/Ent- lüftungselement und einem geöffneten Be-/ Entlüftungselement,
- Fig. 2C: eine vergrösserte perspektivische Detail- ansicht der Getränkebereitungsmaschine wie in Fig. 2B, jedoch mit einer anderen Aus- führungsform des Be-/Entlüftungselements, wobei das Be-/Entlüftungselement in einem geöffneten Zustand dargestellt ist,
- Figuren 3A, 3B: eine Draufsicht auf das Be-/Entlüftungs- element, jeweils in einem geöffneten (Fig. 3B) und einem geschlossenen Zustand (Fig. 3A), und
- Figur 4: ein schematisches Schaubild von Bauteilen der Getränkebereitungsmaschine.

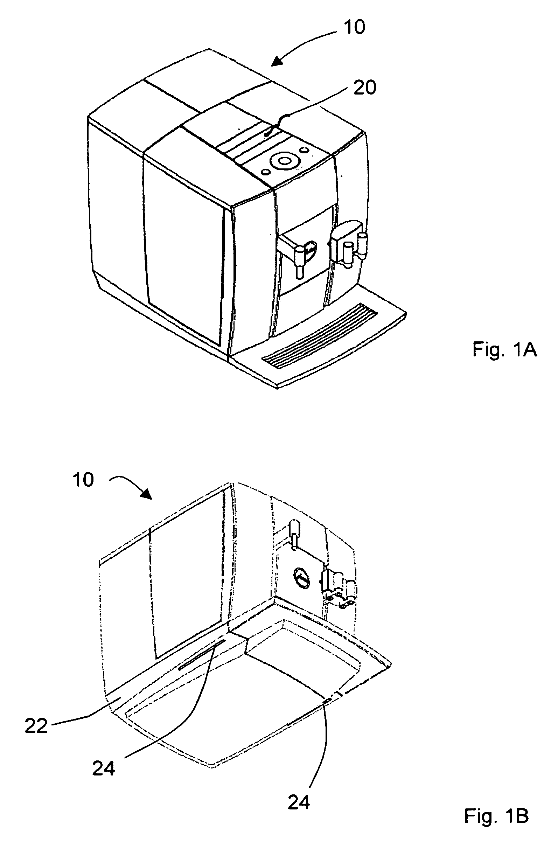

Figuren 1A, 1B zeigen jeweils eine perspektivische Ansicht von einer Getränkebereitungsmaschine 10 mit einem in einem oberen Abschlussdeckel des Aussengehäuses angeordneten Be-/Entlüftungselement 20 in einer Vorderansicht (Figur 1A) und einer Ansicht von unten (Figur 1B). Die Getränkebereitungsmaschine 10 ist in diesem Beispiel als ein Kaffee-Vollautomat ausgeführt. Das Be-/Entlüftungselement 20 ist in einem geschlossenen Zustand angezeigt. In diesem Beispiel kann das Be-/Entlüftungselement 20 geschlossen sein, weil die Getränkebereitungsmaschine 10 ausgeschaltet ist oder die im Innenraum vorherrschende Temperatur und/oder Feuchtigkeit, auch im eingeschalteten Zustand der Getränkebereitungsmaschine 10, unterhalb von Werten ist bzw. sind, bei welchen keine Be-/Entlüftung notwendig ist.

Figur 1A zeigt die Getränkebereitungsmaschine 10 mit einer an der Vorderseite angeordneten Kaffee-Auslassöffnung und Milch-Aufschäumdüse. Unterhalb der Kaffee-Auslassöffnung und Milch-Aufschäumdüse ist ein Auffangsieb bereitgestellt, auf welches ein Trinkgefäss aufgestellt werden kann, und welches eventuell überschüssige Flüssigkeiten hindurch fliessen lässt und in einer Auffangschale aufnimmt.

Das Aussengehäuse der Getränkebereitungsmaschine 10 kann (optional) - zusätzlich zu dem Be-/Entlüftungselement 20 - mit einer oder mehreren Öffnungen ausgestattet werden. Die jeweiligen Öffnungen ermöglichen es - abhängig von dem Durchgangsquerschnitt der jeweiligen Öffnung - Luftströmungen im Innenraum der Getränkebereitungsmaschine 10 zu beeinflussen. Durch eine geeignete Wahl der Anordnung der jeweiligen Öffnung und/oder der jeweiligen Grösse des Durchgangsquerschnitts der jeweiligen Öffnung können beispielsweise die Strömungsgeschwindigkeit oder die Strömungsrichtung der jeweils strömenden Luft beeinflusst und je nach Bedarf optimiert werden.

Das vorliegende Beispiel zeigt, wie das Aussengehäuse der Getränkebereitungsmaschine 10 - zusätzlich zu dem Be-/Entlüftungselement 20 - mit einer oder mehrere Öffnungen ausgestattet werden kann, welche in einem unteren Bereich des Aussengehäuses angeordnet sind: Wie Fig. 1B zeigt, ist die Unterseite des Aussengehäuses der Getränkebereitungsmaschine 10 von einer Bodenplatte 22 gebildet, welche mehrere Öffnungen 24 (im vorliegenden Beispiel in Form von Schlitzen) aufweist. Durch die Öffnungen 24 kann Luft in den Innenraum der Getränkebereitungsmaschine 10 eindringen, den Innenraum der Getränkebereitungsmaschine 10 durchströmen und zum Be-/Entlüftungselement 20 vordringen.

Die Anordnung der Öffnungen 24 hat den Vorteil, dass der gesamte Innenraum der Getränkebereitungsmaschine 10 von Luft durchströmt werden kann und somit das von der jeweiligen Luftströmung erfasste Raumvolumen maximiert wird. Weiterhin wird die Belüftung des Innenraums der Getränkebereitungsmaschine 10 verbessert, insbesondere im Hinblick auf eine Versorgung mit frischer Luft, welche bevorzugt durch die Öffnungen 24 eindringen kann. Es sei weiterhin darauf hingewiesen, dass eine entsprechend vorteilhafte Zufuhr von Luft auch mittels einer oder mehreren Öffnungen erreicht werden kann, welche - anders als die Öffnungen 24 - nicht in der Bodenplatte 22, sondern in anderen Bereichen des Aussengehäuses ausgebildet sein können, beispielsweise in einer Seitenwand oder der Rückwand.

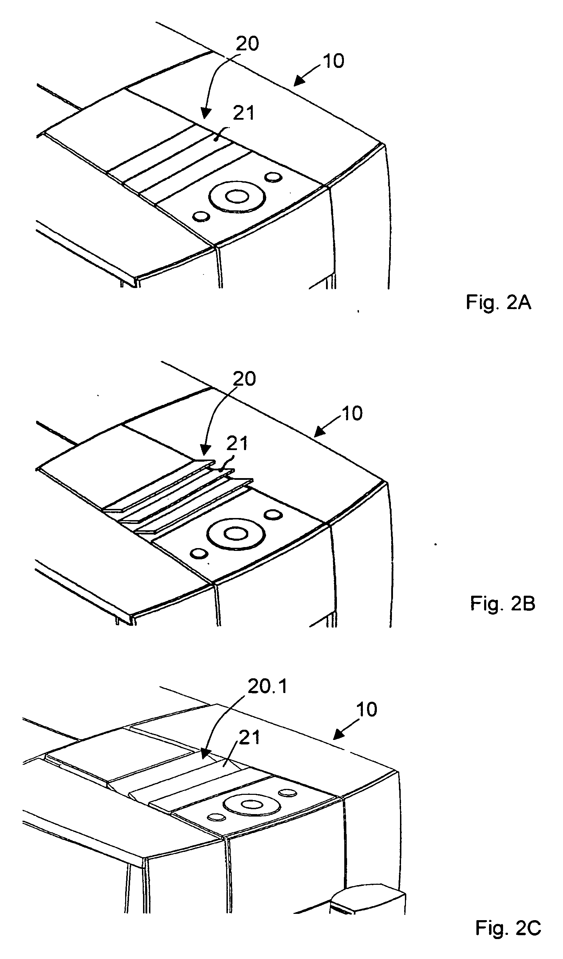

Die Figuren 2A, 2B zeigen jeweils eine Teilvergrösserung der Getränkebereitungsmaschine 10, wobei Figur 2A das Be-/Entlüftungselement 20 im geschlossenen Zustand anzeigt und Figur 2B das Be-/Entlüftungselement 20 im geöffneten Zustand anzeigt. In diesem Beispiel enthält das Be-/Entlüftungselement 20 drei Schwenkklappen 21, welche im geöffneten Zustand um eine jeweils eigene Schwenkachse aufgeschwenkt sind. Es können jedoch auch mehr oder weniger Schwenkklappen 21 vorgesehen werden. Die Position der Schwenkachsen ist jeweils so gewählt, dass sich ein möglichst wirbelfreier Luftstrom durch thermische Konvektion im Innenraum einstellt. Im geschlossenen Zustand des Be-/Entlüftungselements 20 bilden die jeweiligen Aussenseiten der Schwenkklappen 21 mit dem oberen Abschlussdeckel des Aussengehäuses eine ebene und durchgängige Fläche. Somit kann der gesamte obere Abschlussdeckel schnell und einfach und mit reduziertem Einsatz von Reinigungsmitteln gereinigt werden.

Der besondere Vorteil liegt darin, dass im geschlossenen Zustand des Be-/Entlüftungselements 20 kein Staub in den Innenraum eintritt und sich dort auf Bauteile niedersetzt und zum Verstopfen von Öffnungen, beispielsweise im Bodenbereich, führt. Ausserdem können nun nicht mehr unbeabsichtigt Wasser oder kleine Gegenstände in den Innenraum eindringen. Lediglich in einem Zustand, bei welchem Wärme und/oder Feuchtigkeit aus dem Innenraum abgeführt werden muss bzw. müssen, sind die Schwenkklappen 21 geöffnet (siehe Figur 2B). Ansonsten sind die Schwenkklappen 21 geschlossen (siehe Figur 2A), wodurch insgesamt die Wahrscheinlichkeit des Eintritts von Staub, Wasser und/oder kleinen Gegenständen stark reduziert wird. Das geschlossene Be-/Entlüftungselement 20, welches mit dem oberen Abschlussdeckel des Aussengehäuses eine ebene und durchgängige Fläche ausbildet, trifft vom Standpunkt des Designs den Geschmack der Kunden, sodass eine verkaufsfördernde Wirkung erzielt wird. Zudem wird vermieden, dass Abwärme, welche beispielsweise temporär durch das Heizelement erzeugt wird, dauerhaft ungenutzt entweicht.

Fig. 2C zeigt (ähnlich wie Fig. 2A und 2B) einen Abschnitt der Getränkebereitungsmaschine 10, wobei allerdings das Be-/Entlüftungselement 20 gemäss Fig. 2A und 2B ersetzt ist durch ein Be-/Entlüftungselement 20.1, das - wie das Be-/Entlüftungselement 20 - mehrere Schwenkklappen 21 aufweist, welche zum Öffnen oder Schliessen des Be-/Entlüftungselements 20.1 um ein Schwenkachse geschwenkt werden können. Im geschlossenen Zustand des Be-/Entlüftungselements 20.1 bilden die jeweiligen Aussenseiten der Schwenkklappen 21 mit dem oberen Abschlussdeckel des Aussengehäuses eine ebene und durchgängige Fläche (wie im Fall des Be-/Entlüftungselements 20). Zum Öffnen des Be-/Entlüftungselements 20.1 können die Schwenkklappen 21 allerdings zum Innenraum der Getränkebereitungsmaschine 10 hin geschwenkt werden (Fig. 2c), während im Falle des Be-/Entlüftungselements die Schwenkklappen 21 zum Zwecke des Öffnens nach aussen geschwenkt werden können (Fig. 2b). Die Be-/Entlüftungselemente 20 und 20.1 sind funktionell im Wesentlichen äquivalent. Das Be-/Entlüftungselement 20.1 hat lediglich den Vorteil, dass seine Schwenkklappen 21 auch im geöffneten Zustand nicht über die äussere Oberfläche des Aussengehäuses der Getränkebereitungsmaschine 10 hinaus ragen und deshalb besser vor Beschädigungen geschützt sind als die Schwenkklappen 21 des Be-/Entlüftungselements 20.

Natürlich können im Rahmen der Erfindung anstelle der Be-/Entlüftungselemente 20 oder 20.1 auch Be-/Entlüftungselemente anderer Bauart verwendet werden, welche zumindest eine Steuerung eines Luftaustauschs zwischen dem Innenraum und der äusseren Umgebung der Getränkebereitungsmaschine 10 ermöglichen. Der Einfachheit halber soll bei den folgenden Betrachtungen die mit dem Be-/Entlüftungselement 20 ausgestattete Getränkebereitungsmaschine 10 als Beispiel verwendet werden.

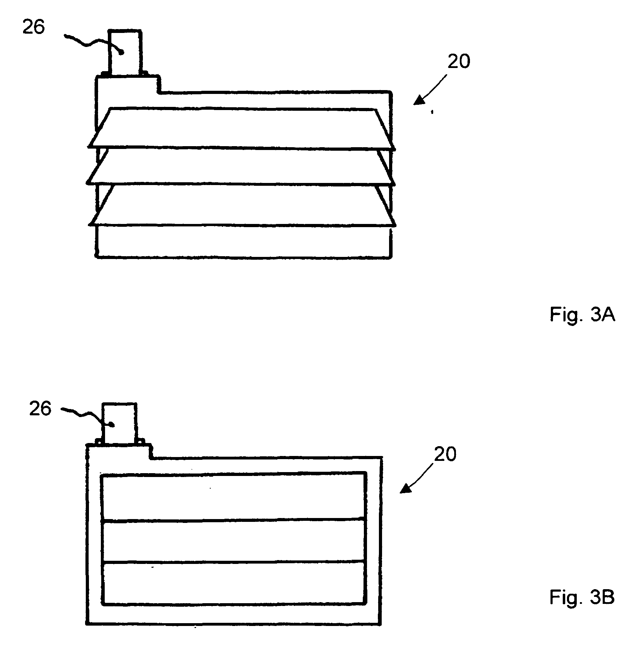

Figuren 3A und 3B zeigen jeweils das Be-/Entlüftungselement 20 in einer Draufsicht. In Figur 3A sind die Schwenkklappen 21 des Be-/Entlüftungselements 20 geöffnet und in Figur 3B sind diese geschlossen. Das Be-/Entlüftungselement 20 wird durch ein Stellglied 26 angesteuert, welches in diesem Beispiel ein elektrischer Antriebsmotor ist. Dieser elektrische Antriebsmotor kann ein Schrittmotor sein, welcher den Schwenkgrad der einzelnen Schwenkklappen 21 durch lineare oder rotative Kraft variabel einstellen kann.

Alternativ kann das Stellglied 26 als ein mit einem Heizdraht umwickeltes Bimetallelement, ein piezoelektrischer Aktuator oder ein Elektromagnet ausgeführt sein. Diese beispielhaften Stellglieder können in Ansprechen auf ein Steuerprogramm, welches in einer Steuereinheit der Getränkebereitungsmaschine ausführbar ist, elektrisch angesteuert werden. Hierzu können im Innenraum der Getränkebereitungsmaschine ein oder mehrere Sensoren angeordnet sein, welche der Steuereinheit dann Signale zuführen, welche auf die Temperatur und/oder die Feuchtigkeit im Innenraum hinweisen.

In einer alternativen Ausführungsform kann das Stellglied ein einfaches Bimetallelement sein, welches beispielsweise am Gehäuse eines Heizelements angebracht ist. Die Erwärmung des Bimetallelements erzeugt dabei eine Formänderung, welche in eine Bewegung überführbar ist, welche dann mechanisch auf die Schwenkklappen 21 übertragen wird, um diese zu öffnen. Es können Federelemente im Be-/Entlüftungselement 20 vorgesehen sein, welche eine Druckkraft ausüben, welche das Schliessen des Be-/Entlüftungselements unterstützt.

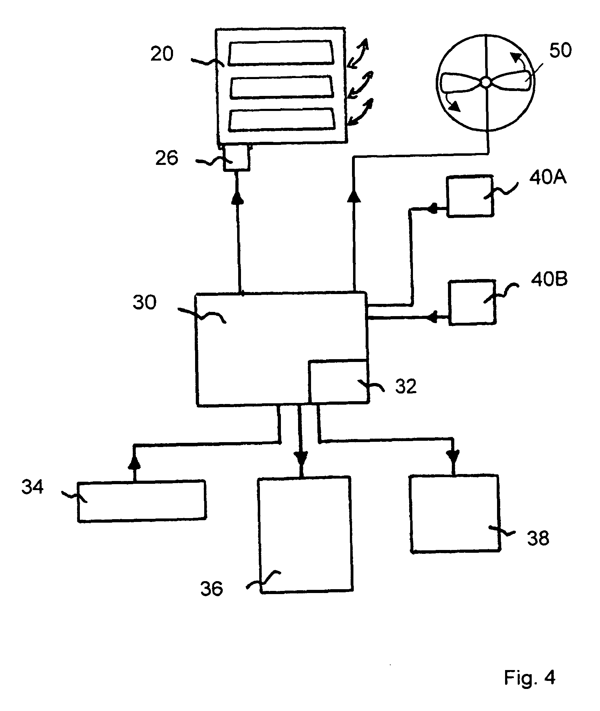

Figur 4 zeigt ein schematisches Schaubild von Bauteilen der Getränkebereitungsmaschine. Eine Steuereinheit 30 kann die gesamte Getränkebereitungsmaschine oder Teilbereiche derer steuern. Die Steuereinheit 30 ist derart ausgebildet, dass ein Steuerprogramm 32 in ihr ausführbar ist. Die Steuereinheit 30 empfängt Steuersignale, welche über ein Bedienfeld 34 von einem Bediener eingegeben werden. Der Bediener kann über das Bedienfeld 34 Befehle hinsichtlich des Wunsches der Kaffeemenge, der Kaffeestärke, usw., und schliesslich einen Startbefehl zum Zubereiten des Kaffees eingeben. Das Steuerprogramm 32 steuert die Steuereinheit 30 zur Ausgabe von entsprechenden Signalen an beispielsweise eine Brühgruppe 36 und/oder eine Dampfbereitungseinheit 38 zur Dampfbereitung zum Aufschäumen von Milch oder zur Abgabe von Heisswasser für beispielsweise Tee. Die Steuereinheit 30 empfängt ebenfalls Signale von einem Temperatursensor 40A und einem Feuchtigkeitssensor 40B. Diese Signale weisen auf die Temperatur und den Feuchtigkeitsgrad im Innenraum der Getränkebereitungsmaschine hin. Die Steuereinheit 30 ist ferner mit dem Stellglied 26 des Be-/Entlüftungselements 20 verbunden. Das Steuerprogramm 32 entscheidet in Ansprechen auf die eingegebenen Signale, ob das Be-/Entlüftungselement 20 geöffnet oder geschlossen werden soll. In Ansprechen auf diese Entscheidung gibt die Steuereinheit 30 entsprechende Signale an das Stellglied 26 des Be-/Entlüftungselements 20 aus.

Je nach Temperatur und Feuchtigkeitsgrad können die Schwenkklappen 21 des Be-/Entlüftungselements 20 auch teilweise geöffnet oder geschlossen werden. Somit wird stets eine optimale Be-/Entlüftung des Innenraums der Getränkebereitstellungsmaschine auf einfache und kostengünstige Art und Weise gewährleistet.

Die Öffnungen 24 können auch derart ausgebildet sein, dass der Durchgangsquerschnitt der jeweiligen Öffnung 24 veränderbar und eine Veränderung des Durchgangsquerschnitts steuerbar ist. Zu diesem Zweck kann beispielsweise die jeweilige Öffnung 24 in Form einer im Aussengehäuse der Getränkebereitungsmaschine 10 ausgebildeten Öffnung, welche mittels eines verstellbaren Verschlusselements verschliessbar ist, realisiert sein, wobei die jeweilige Stellung des Verschlusselements beispielsweise mithilfe der Steuereinheit 30 (in Fig. 4 nicht dargestellt) gesteuert werden kann, um den Durchgangsquerschnitt der jeweiligen Öffnung 24 geeignet einzustellen bzw. zu verändern. Durch eine gesteuerte Veränderung des Durchgangsquerschnitts der jeweiligen Öffnung 24 kann die jeweilige Luftströmung im Innenraum der Getränkebereitungsmaschine 10 gesteuert werden, beispielsweise in Abhängigkeit von Signalen des Temperatursensors 40A und/oder des Feuchtigkeitssensors 40B. Die Luftströmung im Innenraum kann zumindest zeitweilig auch ausschliesslich durch Steuern der momentanen Grösse des Durchgangsquerschnitts der jeweiligen Öffnung 24 gesteuert werden, beispielweise während einer Zeitspanne, in der die jeweiligen Schwenkklappen 21 des Be-/Entlüftungselements 20 eine vorgegebene Stellung einnehmen und in der sich das Be-/Entlüftungselement 20 demzufolge unverändert in jeweils demselben Zustand befindet.

Wie Fig. 4 andeutet, können (optional) in einer Ausführungsform der Getränkebereitungsmaschine 10 einer oder mehrere Ventilatoren 50 an die Steuereinheit 30 angeschlossen sein, wobei der jeweilige Ventilator 50 zur Erzeugung eines zur Be-/Entlüftung des Innenraums der Getränkebereitungsmaschine 10 beitragenden Luftstroms dient und zu diesem Zweck im Innenraums der Getränkebereitungsmaschine 10 angeordnet ist. Ein Ventilator 50 kann beispielsweise in der Nachbarschaft des Be-/Entlüftungselements 20 (beispielsweise unterhalb des Be-/Entlüftungselements 20) derart angeordnet sein, dass der mit dem Ventilator 50 erzeugbare Luftstrom das Be-/ Entlüftungselement 20 durchströmen kann. Alternativ oder zusätzlich zu dem vorstehend genannten Ventilator 50 kann beispielsweise in der Nachbarschaft der jeweiligen Öffnung 24 (beispielsweise oberhalb der jeweiligen Öffnung 24) ein Ventilator 50 derart angeordnet sein, dass der mit diesem Ventilator 50 erzeugbare Luftstrom die jeweilige Öffnung 24 durchströmen kann. Der Betrieb des jeweiligen Ventilators 50 ist mittels des Steuerprogramms 32 steuerbar, sodass der jeweilige Ventilator 50 zeitlich korreliert mit einer Ansteuerung des Be-/Entlüftungselements 20 und/oder einer Veränderung des Durchgangsquerschnitts einer der Öffnungen 24 oder zeitlich korreliert mit einem bestimmten Betriebszustand der Getränkebereitungsmaschine 10 (z.B. korreliert mit der Bereitung eines Getränks) an- oder abgeschaltet oder auf andere Weise (z.B. hinsichtlich der pro Zeiteinheit geförderten Luftmenge) beeinflusst werden kann.

In der Ausführungsform gemäss Fig. 4 ist das Steuerprogramm 32 so eingerichtet, dass der jeweilige Ventilator 50 - analog zur Ansteuerung des Be-/Entlüftungselements 20 - in Abhängigkeit von einem Betriebszustand der Getränkebereitungsmaschine 10 und/oder einer Zeitfunktion und/oder einer vorgegebenen Schwellwertfunktion und/oder in Abhängigkeit von Signalen mindestens eines der Sensoren 40A oder 40B ansteuerbar ist. Durch Vorgabe einer Zeitfunktion kann beispielsweise die Dauer einer Zeitspanne festgelegt sein, während welcher der jeweilige Ventilator 50 an- bzw. abgeschaltet sein soll. Durch Vorgabe einer Schwellwertfunktion können beispielsweise Schwellwerte für bestimmte Betriebsparameter (wie Temperatur oder Luftfeuchtigkeit im Innenraum) definiert sein, wobei der jeweilige Schwellwert festlegt, dass der jeweilige Ventilator 50 von der Steuereinheit 30 an- bzw. abgeschaltet oder anderweitig beeinflusst wird, wenn der jeweilige Betriebsparameter einen der jeweils definierten Schwellwerte über- oder unterschreitet.

## Patentansprüche

1. Getränkebereitungsmaschine (10) mit einem Aussengehäuse, welches mindestens ein Be-/Entlüftungselement (20) zur Be-/Entlüftung eines vom Aussengehäuse umschlossenen Innenraums enthält, **dadurch gekennzeichnet, dass** das mindestens eine Be-/Entlüftungselement (20, 20.1) zum Öffnen und Schliessen ansteuerbar ist.

2. Getränkebereitungsmaschine (10) nach Anspruch 1, bei welcher das mindestens eine Be-/Entlüftungselement (20) zu einem variablen Öffnen und Schliessen ansteuerbar ist.

3. Getränkebereitungsmaschine (10) nach Anspruch 1 oder 2, bei welcher das mindestens eine Be-/Entlüftungselement (20, 20.1) in einem oberen Bereich des Aussengehäuses oder im oberen Abschlussdeckel des Aussengehäuses oder unterhalb eines ebenen, durchgängigen und mit Öffnungen versehenen Flächenelements angeordnet ist.

4. Getränkebereitungsmaschine (10) nach einem der Ansprüche 1-3, bei welcher die Aussenseite des Be-/Entlüftungselementes (20, 20.1) im geschlossenen Zustand eine ebene, durchgängige Fläche ausbildet, welche an eine angrenzende Aussenfläche des Aussengehäuses anschliesst.

5. Getränkebereitungsmaschine (10) nach einem der Ansprüche 1-4, bei welcher mindestens eine Öffnung (24) im Aussengehäuse vorgesehen ist, wobei das mindestens eine Be-/Entlüftungselement (20, 20.1) und die mindestens eine Öffnung (24) derart angeordnet sind, dass sich bei geöffnetem Be-/Entlüftungselement (20, 20.1) eine thermische Konvektion von Aussenluft durch den Innenraum einstellt.

6. Getränkebereitungsmaschine (10) nach Anspruch 5, bei welcher die mindestens eine Öffnung (24) in einem unteren Bereich des Aussengehäuses angeordnet ist.

7. Getränkebereitungsmaschine (10) nach einem der Ansprüche 5 oder 6, wobei ein Durchgangsquerschnitt der mindestens einen Öffnung (24) veränderbar und eine Veränderung des Durchgangsquerschnitts steuerbar ist.

8. Getränkebereitungsmaschine (10) nach einem der Ansprüche 1-7, bei welcher das Be-/Entlüftungselement (20) durch ein Stellglied (26) ansteuerbar ist.

9. Getränkebereitungsmaschine (10) nach Anspruch 8, bei welcher das Stellglied (26) ein elektrischer Antriebsmotor oder ein piezoelektrischer Aktuator oder ein Elektromagnet oder ein Bimetallelement oder ein mit einem Heizdraht umwickeltes Bimetallelement ist.

10. Getränkebereitungsmaschine (10) nach einem der Ansprüche 8 oder 9, bei welcher das Stellglied (26) dazu ausgebildet ist, das Be-/Entlüftungselement (20) in Ansprechen auf einen Betriebszustand der Getränkebereitungsmaschine (10) anzusteuern.

11. Getränkebereitungsmaschine (10) nach einem der Ansprüche 8 bis 10, bei welcher das Stellglied (26) dazu ausgebildet ist, in Ansprechen auf ein Steuerprogramm (32), welches in einer Steuereinheit (30) der Getränkebereitungsmaschine (10) ausführbar ist, elektrisch ansteuerbar zu sein.

12. Getränkebereitungsmaschine (10) nach einem der Ansprüche 1-11, mit einem im Innenraum angeordneten Ventilator (50) zur Erzeugung eines zur Be-/Entlüftung des Innenraums beitragenden Luftstroms, wobei der Ventilator mittels eines Steuerprogramms (32), welches in einer Steuereinheit (30) der Getränkebereitungsmaschine (10) ausführbar ist, in Abhängigkeit von einem Betriebszustand der Getränkebereitungsmaschine (10) und/oder einer Zeitfunktion und/oder Schwellwertfunktion und/oder in Abhängigkeit von Signalen mindestens eines Sensors (40A, 40B) ansteuerbar ist.

13. Getränkebereitungsmaschine (10) nach Anspruch 11, bei welcher das Steuerprogramm (32) dazu ausgebildet ist, das Stellglied (26) in Abhängigkeit von einer Zeitfunktion und/oder Schwellwertfunktion anzusteuern und/oder in Abhängigkeit von Signalen mindestens eines Sensors (40A, 40B) anzusteuern.

14. Getränkebereitungsmaschine (10) nach einem der Ansprüche 12 oder 13, bei welcher der Sensor ein Temperatursensor (40A) und/oder ein Feuchtigkeitssensor (40B) ist.

15. Verfahren zum Be-/Entlüften eines von einem Aussengehäuse umschlossenen Innenraums einer Getränkebereitungsmaschine (10) durch mindestens ein Be-/Entlüftungselement (20), bei welchem das mindestens eine Be-/Entlüftungselement (20) zum Öffnen und Schliessen angesteuert wird.

## Claims

1. Drink preparation machine (10) with an outer housing which contains at least one ventilation element (20) for ventilating an interior which is enclosed by the outer housing, **characterised in that** the at least one ventilation element (20, 20.1) can be actuated to open and close.

2. Drink preparation machine (10) according to Claim 1, in which the at least one ventilation element (20) can be actuated to open and close variably.

3. Drink preparation machine (10) according to Claim 1 or 2, in which the at least one ventilation element (20, 20.1) is arranged in an upper region of the outer housing or in the upper closure lid of the outer housing or below a flat, continuous surface element which is provided with openings.

4. Drink preparation machine (10) according to one of Claims 1 to 3, in which the outer side of the ventilation element (20, 20.1) in the closed state forms a flat, continuous surface which connects to an adjacent outer surface of the outer housing.

5. Drink preparation machine (10) according to one of Claims 1 to 4, in which at least one opening (24) is provided in the outer housing, wherein the at least one ventilation element (20, 20.1) and the at least one opening (24) are arranged in such a manner that a thermal convection of external air through the interior is produced when the ventilation element (20, 20.1) is open.

6. Drink preparation machine (10) according to Claim 5, in which the at least one opening (24) is arranged in a lower region of the outer housing.

7. Drink preparation machine (10) according to one of Claims 5 or 6, wherein a flow cross section of the at least one opening (24) is variable, and a variation of the flow cross section can be controlled.

8. Drink preparation machine (10) according to one of Claims 1 to 7, in which the ventilation element (20) can be actuated by an actuation member (26).

9. Drink preparation machine (10) according to Claim 8, in which the actuation member (26) is an electrical drive motor or a piezoelectric actuator or an electromagnet or a bimetal element or a bimetal element around which a heating wire is wound.

10. Drink preparation machine (10) according to one of Claims 8 or 9, in which the actuation member (26) is configured to actuate the ventilation element (20) in response to an operating state of the drink preparation machine (10).

11. Drink preparation machine (10) according to one of Claims 8 to 10, in which the actuation member (26) is configured to be electrically actuatable in response to a control program (32) which can be executed in a control unit (30) of the drink preparation machine (10).

12. Drink preparation machine (10) according to one of Claims 1 to 11, with a ventilator (50) which is arranged in the interior for generating an air flow which contributes to the ventilation of the interior, wherein the ventilator can be actuated by means of a control program (32) which can be executed in a control unit (30) of the drink preparation machine (10) as a function of an operating state of the drink preparation machine (10) and/or of a time function and/or of a threshold function and/or as a function of signals of at least one sensor (40A, 40B).

13. Drink preparation machine (10) according to Claim 11, in which the control program (32) is configured to actuate the actuation member (26) as a function of a time function and/or threshold function and/or as a function of signals of at least one sensor (40A, 40B).

14. Drink preparation machine (10) according to one of Claims 12 or 13, in which the sensor is a temperature sensor (40A) and/or a moisture sensor (40B).

15. Method for ventilating an interior, which is enclosed by an outer housing, of a drink preparation machine (10) by at least one ventilation element (20), in which the at least one ventilation element (20) is actuated to open and close.

## Revendications

1. Machine de préparation de boissons (10) avec un corps extérieur, qui contient au moins un élément d'aération/de purge (20) pour l'aération/la purge d'un espace intérieur entouré par le corps extérieur, **caractérisée en ce que** l'au moins un élément d'aération/de purge (20, 20.1) est amorçable à l'ouverture et à la fermeture.

2. Machine de préparation de boissons (10) selon la revendication 1, sur laquelle l'au moins un élément d'aération/de purge (20) est amorçable pour une ouverture et une fermeture variables.

3. Machine de préparation de boissons (10) selon la revendication 1 ou la revendication 2, sur laquelle l'au moins un élément d'aération/de purge (20, 20.1) est disposé dans une région supérieure du corps extérieur ou dans le couvercle supérieur de fermeture ou sous un élément surfacique plan, traversant et muni d'ouvertures.

4. Machine de préparation de boissons (10) selon l'une quelconque des revendications 1 à 3, sur laquelle, à l'état fermé, la face extérieure de l'élément d'aération/de purge (20, 20.1) forme une surface plane, traversante qui se raccorde sur une surface extérieure adjacente du corps extérieur.

5. Machine de préparation de boissons (10) selon l'une quelconque des revendications 1 à 4, sur laquelle au moins une ouverture (24) est prévue dans le corps extérieur, l'au moins un élément d'aération/de purge (20, 20.1) et l'au moins une ouverture (24) étant disposés de telle sorte que lorsque l'élément d'aération/de purge (20, 20.1) est ouvert, il s'établisse une convection thermique d'air extérieur à travers l'espace intérieur.

6. Machine de préparation de boissons (10) selon la revendication 5, sur laquelle l'au moins une ouverture (24) est disposée dans la région inférieure du corps extérieur.

7. Machine de préparation de boissons (10) selon l'une quelconque des revendications 5 ou 6, une section transversale traversante de l'au moins une ouverture (24) étant variable et une variation de la section transversale traversante étant contrôlable.

8. Machine de préparation de boissons (10) selon l'une quelconque des revendications 1 à 7, sur laquelle l'élément d'aération/de purge (20) est amorçable à l'aide d'un organe de réglage (26).

9. Machine de préparation de boissons (10) selon la revendication 8, sur laquelle l'organe de réglage (26) est un moteur d'entraînement électrique ou un actionneur piézoélectrique ou un électroaimant ou un élément bimétallique ou un élément bimétallique enroulé d'un filament chauffant.

10. Machine de préparation de boissons (10) selon l'une quelconque des revendications 8 ou 9, sur laquelle l'organe de réglage (26) est conçu pour amorcer l'élément d'aération/de purge (20) en réponse à un état de service de la machine de préparation de boissons (10).

11. Machine de préparation de boissons (10) selon l'une quelconque des revendications 8 à 10, sur laquelle l'organe de réglage (26) est conçu pour être électriquement amorçable en réponse à un programme de commande (32), lequel est exécutable dans une unité de commande (30) de la machine de préparation de boissons (10) .

12. Machine de préparation de boissons (10) selon l'une quelconque des revendications 1 à 11, avec un ventilateur (50) disposé dans l'espace intérieur pour la génération d'un flux d'air contribuant à l'aération/la purge de l'espace intérieur, le ventilateur étant amorçable au moyen d'un programme de commande (32), lequel est exécutable dans une unité de commande (30) de la machine de préparation de boissons (10, en relation avec un état de service de la machine de préparation de boissons (10) et/ou avec une fonction de temps et/ou avec une fonction de valeur seuil et/ou avec une fonction de signaux d'au moins un capteur (40A, 40B).

13. Machine de préparation de boissons (10) selon la revendication 11, sur laquelle le programme de commande (32) est conçu pour amorcer l'organe de réglage (26) en relation avec une fonction de temps et/ou avec une fonction de valeur seuil et ou pour l'amorcer en fonction de signaux d'au moins un capteur (40A, 40B).

14. Machine de préparation de boissons (10) selon l'une quelconque des revendications 12 ou 13, sur laquelle le capteur est une sonde thermique (40A) et/ou une sonde d'humidité (40B).

15. Procédé d'aération/de purge d'un espace intérieur entouré par un corps extérieur d'une machine de préparation de boissons (10) par au moins un élément d'aération/de purge (20), lors duquel l'au moins un élément d'aération/de purge (20) est amorcé en ouverture et en fermeture.
